# EUROPEAN PATENT SPECIFICATION

(11) **EP 3 496 007 B1**
(45) Date of publication and mention of the grant of the patent: **05.10.2022**
(21) Application number: 17836414.7
(22) Date of filing: 03.08.2017
(51) Int. Cl.: G06N 3/063, G06N 3/04, G06F 15/173

(54) **DEVICE AND METHOD FOR EXECUTING NEURAL NETWORK OPERATION**
VORRICHTUNG UND VERFAHREN ZUR AUSFÜHRUNG DES BETRIEBS EINES NEURONALEN NETZWERKS
DISPOSITIF ET PROCÉDÉ D'EXÉCUTION D'UNE OPÉRATION SUR UN RÉSEAU NEURONAL

(30) Priority: 05.08.2016 CN 201610635286
(43) Date of publication of application: 12.06.2019
(73) Proprietor: Cambricon Technologies Corporation Limited, Beijing 100191 (CN)
(72) Inventor: CHEN, Yunji, Beijing 100191 (CN); LIU, Shaoli, Beijing 100191 (CN); HAN, Dong, Beijing 100191 (CN); CHEN, Tianshi, Beijing 100191 (CN)
(74) Representative: Huang, Liwei
(86) International application number: PCT/CN2017/095810
(87) International publication number: WO 2018/024232

(56) References cited:
- WO-A1-2013/118008
- WO-A1-2016/037351
- CN-A- 101 882 238
- CN-A- 102 193 518
- CN-A- 105 488 565
- CN-A- 105 512 723
- HASAN RAQIBUL ET AL: "Routing bandwidth model for feed forward neural networks on multicore neuromorphic architectures", THE 2013 INTERNATIONAL JOINT CONFERENCE ON NEURAL NETWORKS (IJCNN), IEEE, 4 August 2013 (2013-08-04), pages 1-8, XP032542351, ISSN: 2161-4393, DOI: 10.1109/IJCNN.2013.6706775 [retrieved on 2014-01-08]

## Description

### TECHNICAL FIELD

The present disclosure belongs to the field of neural network operation, and in particular, relates to a device and method for executing neural network operation.

### BACKGROUND

One known method of supporting multicore and multi-layer neural network operation is using a general-purpose processor. This method supports the above operation by executing general instructions using general register files and general functional units. One of the shortcomings of this method is that the operation performance of a single general-purpose processor is relatively low, which cannot meet the performance requirements of common multicore and multi-layer artificial neural network operation. When multiple general-purpose processors execute the above operations in parallel, the communication among the general-purpose processors becomes the bottleneck of performance. In addition, the general-purpose processors need to decode the artificial neural network operation into a long list of operations and memory access instruction sequence. The decoding at the front end of the processor results in large power consumption overheads.

Another known method of supporting multicore and multi-layer artificial neural network operation is using a Graphics Processing Unit (GPU). This method supports the above operation by executing a general SIMD instruction using general register files and general stream processing units. Since GPU is a device specially used to perform graphic image operation and scientific calculation without providing special support to artificial neural network operation, it still needs a lot of front-end decoding work to perform multi-layer artificial neural network operation, which results in large extra overheads. In addition, GPU has only a small on-chip buffer, thus the model data (weights) of multi-layer artificial neural network need to be repeatedly transported from off-chip and off-chip bandwidth becomes the main performance bottleneck.

HASAN RAQIBUL ET AL: "Routing bandwidth model for feed forward neural networks on multicore neuromorphic architectures", THE 2013 INTERNATIONAL JOINT CONFERENCE ON NEURAL NETWORKS (IJCNN), IEEE, 4 August 2013 (2013-08-04), pages 1-8, ISSN: 2161-4393, DOI: 10.1109/IJCNN.2013.6706775, relates to a routing bandwidth model for feed forward neural networks on multicore architectures. CN 105512723 A relates to a sparsely connected neural network calculating device. WO 2016/037351 A1 relates to a computing system for training neural networks. And WO 2013/118008 A1 relates to a processor performance improvement for instruction sequences that include barrier instructions.

### SUMMARY

In view of this, the present disclosure provides a device and a method for executing neural network operation, which can implement one or more layers of multicore and multi-layer artificial neural network operation with low overheads and achieve efficient operational performance.

The invention is defined by the appended claims.

The present disclosure provides a device for executing neural network operation as defined by the claims 1 to 6, and a method for executing neural network operation as defined by the claims 7 to 9.

The device includes an on-chip interconnection module and a plurality of neural network processing modules communicatively connected to the on-chip interconnection module. The neural network processing module can read data from other neural network processing modules and write data to other neural network processing modules through the on-chip interconnection module. In multicore and multi-layer artificial neural network operation, each layer of neural network operation is divided, and further is performed by the plurality of neural network processing modules to obtain respective operation result data, and the plurality of neural network processing modules also exchange the respective operation result data. For example, after neural network operation of one layer is performed, each neural network processing module only calculates and obtains part of the output data, and when the neural network operation of next layer is performed, each neural network processing module also needs data from other neural network processing modules, so each neural network processing module needs to send respective operation result data obtained by calculation to the corresponding neural network processing module so as to perform neural network operation of next layer.

In the device for executing the neural network operation, the neural network processing module can read data from other neural network processing modules and write data to other neural network processing modules through the on-chip interconnection module, and can also read and write data locally.

Optionally, the neural network processing module comprises a neural network processing unit configured to read and write data and a high-speed storage unit configured to store local data.

Optionally the device for executing the neural network operation further comprises an external storage module, and the neural network processing module can read data from the external storage module and write data to the external storage module through the on-chip interconnection module.

Optionally, the neural network processing unit comprises an instruction queue, a high-speed buffer unit, an IO reading unit and a neural network operation unit, wherein:
Optionally, the instruction queue stores operation instructions, the IO reading unit reads data from the outside of the neural network processing unit according to the operation instructions and buffers the read data into the high-speed buffer unit, and the neural network operation unit reads the buffered data from the high-speed buffer unit according to the operation instructions and executes neural network operation to obtain operation result data;
the neural network operation unit writes the operation result data into the high-speed buffer unit, and the IO reading unit reads the operation result data from the high-speed buffer unit and writes the operation result data to the outside of the neural network processing unit.

Optionally, the instruction queue also stores data delivery instructions; after the neural network operation unit sends data to other neural network operation units, corresponding synchronization relation unit of the neural network operation unit executes the data delivery instruction to send a data delivery signal to corresponding synchronization relation units of other neural network operation units.

Optionally, the instruction queue further stores data dependence instructions, and after the neural network operation unit receives data sent by the other neural network operation units, corresponding synchronization relation unit of the neural network operation unit executes the data dependence instruction to detect whether a data delivery signal has been received, if so, the neural network operation unit continues to execute the instructions in the instruction queue, otherwise it blocks the instruction queue.

Optionally, the on-chip interconnection module comprises a first-level interconnection module and a plurality of second-level interconnection modules communicatively connected to the first-level interconnection module, the first-level interconnection module is further communicatively connected to external storage module, and the plurality of second-level interconnection modules correspond to the plurality of neural network processing modules one by one, wherein each second-level interconnection module is communicatively connected to a neural network processing unit and a high-speed storage unit in the corresponding neural network processing module, respectively.

The present disclosure also provides a method for performing single-layer neural network operation as defined in claims 10 to 11.

The present disclosure also provides a method for executing multi-layer neural network operation as defined in claim 12.

The device and method for executing neural network operation provided by the present disclosure have the following advantages:
1. The adoption of the multicore neural network processing module allows a single-layer neural network to divide a task and to carry out the task on multiple neural network processing modules, and the adoption of dedicated instructions allow the data obtained by calculation to be transmitted among the multiple neural network processors when the multi-layer neural network operation is executed, thereby achieving the multi-layer and multicore neural network operation;
2.The adoption of the multicore neural network processing module solves the problem of the processing performance of a single processor being insufficient when performing the multicore and multi-layer neural network processing operation, thereby having the effect of significantly accelerating the multicore and multi-layer neural network operation; and
3. The adoption of a dedicated data instruction effectively solves the problem that the multiple processors need to exchange a large number of data when performing the multicore and multi-layer neural network operation, thereby having the effect of significantly accelerating the multicore and multi-layer neural network operation.

### BRIEF DESCRIPTION OF THE DRAWINGS

Fig. 1 is a schematic structural diagram of a device for executing neural network operation provided by the present disclosure;
Fig. 2 is a schematic structural diagram of a neural network processing module in the present disclosure;
Fig. 3 is a schematic structural diagram of an external storage module in the present disclosure;
Fig. 4 is a schematic structural diagram of a neural network processing unit in the present disclosure;
Fig. 5 is a schematic structural diagram of an on-chip interconnection module in the present disclosure;
Fig. 6 is a flowchart of an embodiment of performing the operations of one layer of fully-connected layer according to the present disclosure.

### DETAILED DESCRIPTION

The device for executing the artificial neural network operation provided by the present disclosure can be applied to (including but not limited to) the following scenarios: various electronic products such as data processing devices, robots, computers, printers, scanners, telephones, tablet computers, intelligent terminals, mobile phones, traffic recorders, navigators, sensors, camera heads, cloud servers, cameras, video cameras, projectors, watches, earphones, mobile storage, wearable devices and the like; various means of transportation such as aircrafts, ships, vehicles and the like; various household electrical appliances such as televisions, air conditioners, microwave ovens, refrigerators, electric cookers, humidifiers, washing machines, electric lamps, gas stoves, range hoods and the like; and various medical equipment such as nuclear magnetic resonance apparatus, B ultrasonic apparatus, electrocardiogram apparatus, etc.

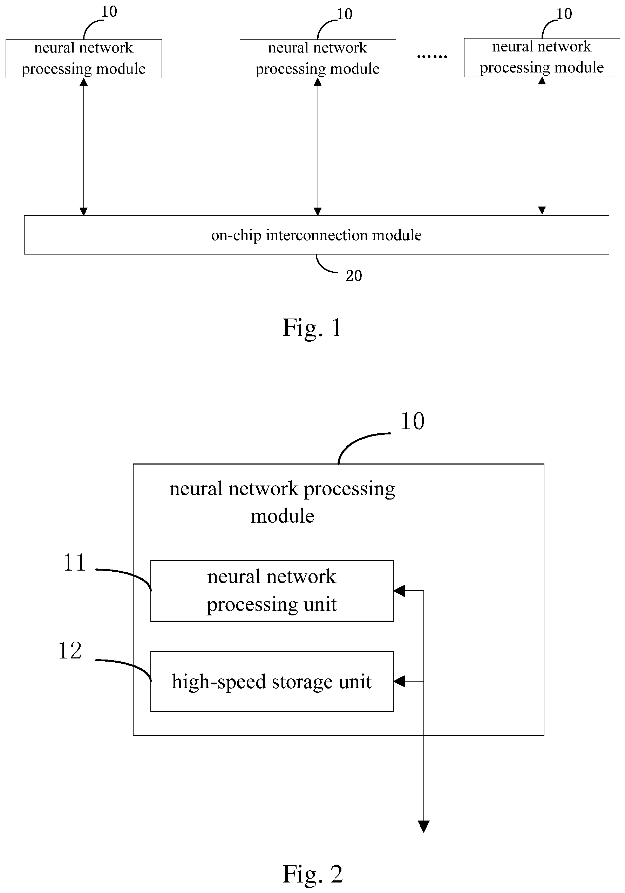

Fig. 1 is a schematic structural diagram of a device for executing neural network operation provided by the present disclosure. As shown in Fig. 1, the device includes a plurality of neural network processing modules 10 and an on-chip interconnection module 20. The plurality of neural network processing modules 10 are communicatively connected to the on-chip interconnection module 20, wherein:
The neural network processing module 10 can read data from other neural network processing modules and write data to other neural network processing modules 10 through the on-chip interconnection module 20, and can also read and write data locally. When executing a neural network operation, each neural network processing module 10 executes corresponding operation as a core, and the data required for the operations can be directly obtained locally or can be read from other neural network processing modules 10 through the communication with other neural network processing modules 10 via the on-chip interconnection module 20. After each neural network processing module 10 reads the data required for the operation, it executes the corresponding operation to obtain respective operation result data. In a single-layer neural network operation, each neural network processing module 10 can aggregate their respective operation result data into one neural network processing module 10 for accumulation to obtain the final result data. In a multi-layer neural network operation, the operation result data obtained by the operation of each neural network processing modules 10 in current layer may be used by other neural network processing modules 10 as the data required for the operations in the next layer, so that after the neural network operations are completed in current layer, the respective neural network processing modules 10 will perform data interaction in preparation for the neural network operations in the next layer.

Fig. 2 is a schematic structural diagram of a neural network processing module in the present disclosure. As shown in Fig. 2, the neural network processing module 10 includes a neural network processing unit 11 and a high-speed storage unit 12. When the neural network processing module 10 executes a neural network operation, the neural network processing unit 11 directly reads data from its corresponding high-speed storage unit 12, and/or reads data from the neural network processing units 11 in other neural network processing modules 10 through the on-chip interconnection module 20, and/or reads data from the high-speed storage units 12 in other neural network processing modules 10 through the on-chip interconnection module 20; the neural network processing unit 11 in each neural network processing module 10 executes the neural network operation according to the read data to obtain respective operation result data; after completing the operation, the neural network processing unit 11 directly writes the operation result data into its corresponding high-speed storage unit 12, and/or writes the operation result data into the neural network processing units 11 in other neural network processing modules 10 through the on-chip interconnection module 20, and/or writes the operation result data into the high-speed storage units 12 in other neural network processing modules 10 through the on-chip interconnection module 20. In short, the neural network processing unit 11 can directly acquire data from its corresponding high-speed storage unit, and can also acquire data from other locations through the on-chip interconnection module 20, thus avoiding repeatedly reading data from the memory and reducing the memory access bandwidth.

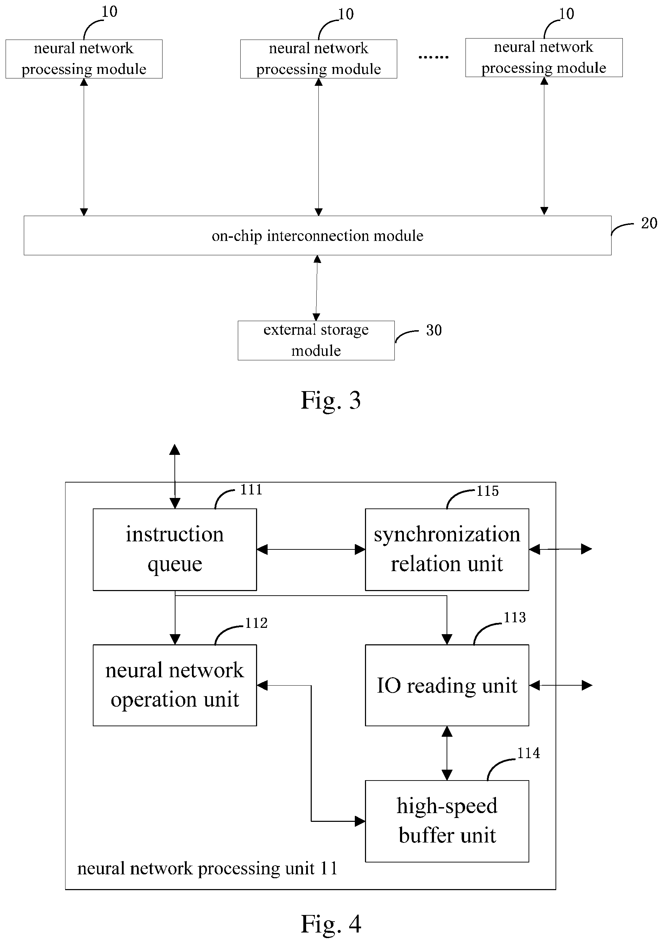

As shown in Fig. 3, the device for executing the neural network operation provided by the present disclosure further includes an external storage module 30 that is communicatively connected to the on-chip interconnection module 20. The neural network processing module 10 can also read/write data from/to the external storage module through the on-chip interconnection module. By using the external storage module 30, new data can be imported from the outside into the device, and the final execution result data obtained by the execution of the device can also be written into the external storage module 30 for external export. The external storage module 30 may be implemented by hardware (including but not limited to FPGA (Field Programmable Gate Array), CGRA(Coarse Grained Reconfigurable Architecture), ASIC (application-specific integrated circuit), analog circuit or memristor, etc.).

Fig. 4 is a schematic structural diagram of the neural network processing unit 11 in the present disclosure. As shown in Fig. 4, the neural network processing unit 11 includes an instruction queue 111, a neural network operation unit 112, an IO reading unit 113, a high-speed buffer unit 114, and a synchronization relation unit 115. The instruction queue 111 stores multiple types of instructions, and the neural network processing unit 11 executes different operations according to different instructions. The following table describes the various types of instructions:

| Instruction Name | Opcode1 | Opcode 2 | Opcode 3 | Opcode 4 | Opcode 5 | •••••• |
|---|---|---|---|---|---|---|
| ACK | 0/1 | 0/1 | 0/1 | 0/1 | 0/1 | •••••• |
| FENCE | 0/1 | 0/1 | 0/1 | 0/1 | 0/1 | •••••• |
| SYNC | 0/1 | 0/1 | 0/1 | 0/1 | 0/1 | •••••• |
| COMPUTE | MLP | addr1 | size1 | addr2 | size2 | •••••• |
| IO | src | dest | size | | | |

The instructions include instruction names and a plurality of opcodes:
a data delivery instruction, named ACK, wherein the opcodes respectively indicate whether to send a data delivery signal (ACK signal) to other neural network processing units 11; after the neural network processing unit 11 writes data into other neural network processing units 11, the neural network processing unit 11 executes the data delivery instruction to send a data delivery signal to the corresponding neural network processing unit 11 to indicate that the data has been successfully transmitted;
a data dependence instruction, named FENCE, wherein the opcodes respectively indicate whether to check the ACK signal from the neural network processing units 11; and a neural network processing unit 11 executes a data dependence instruction to detect whether all dependence data has reached the current neural network processing unit;
a data synchronization instruction, named SYNC, wherein each of the opcodes indicates whether a respective neural network processing unit is to participate in the synchronization operation, so as to indicate that multiple neural network processing units 11 are to participate in the synchronization; and a neural network processing unit 11 executes the data synchronization instruction to force the multiple neural network processing units 11 to perform the synchronization operation; that is, the multiple neural network processing units start to execute subsequent instructions only after all of them have executed the data synchronization instruction;
an operation instruction, named COMPUTE, wherein the first opcode represents a specific operation task, such as MLP, CONV, POOL, etc., and the remaining opcodes are used to represent the address and size of input and output data, as well as the configuration information of the neural network operation instruction;
an input and output instruction, named IO, wherein the opcodes respectively represent the information of the starting address, ending address and data size of the transport data, and the neural network processing unit 11 executes the input and output instruction to communicate data with other modules.

The IO reading unit 113 reads data from the outside of the neural network processing unit 11 (e.g., the high-speed storage unit 12, other neural network processing units 11, etc.) according to the operation instructions in the instruction queue 111 and buffers the read data into the high-speed buffer unit 114. The neural network operation unit 112 reads the buffered data from the high-speed buffer unit 114 according to the operation instruction and performs neural network operation to obtain corresponding operation result data.

The neural network operation unit 112 writes the operation result data into the high-speed buffer unit 114. When it is necessary to send the operation result data to the outside (e.g., other neural network processing units 11), the IO reading unit 113 reads the operation result data from the high-speed buffer unit 114 and writes the operation result data to the outside of the neural network processing unit 11.

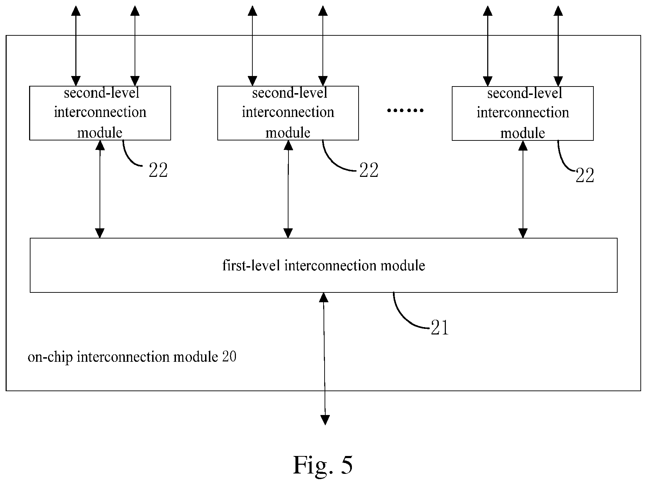

Fig. 5 is a schematic structural diagram of an on-chip interconnection module in the present disclosure. As shown in Fig. 5, the on-chip interconnection module 20 includes a first-level interconnection module 21 and a plurality of second-level interconnection modules 22 communicatively connected to the first-level interconnection module. The first-level interconnection module 21 is also communicatively connected to an external storage module 30, and the plurality of second-level interconnection modules 22 correspond to the plurality of neural network processing modules 10 one by one, wherein each second-level interconnection module 22 is communicatively connected to the neural network processing unit 11 and the high-speed storage unit 12 in the corresponding neural network processing module, respectively. Specifically, one port of the second-level interconnection module 22 is connected to the neural network processing unit 11, one port is connected to the corresponding high-speed storage unit 12 of the neural network processing unit, and another port is connected to the first-level interconnection module 21; and the first-level interconnection module 21 connects the plurality of second-level interconnection modules 22 and the external storage module 30 to ensure the data path between these modules. In this way, it is possible to ensure communication between the external storage module 30 and the respective neural network processing units 11 as well as the high-speed storage unit 12, and to occupy a small area overhead.

In addition, the on-chip interconnection module 20 may further include one or more third-level interconnection modules communicatively connected to each second-level interconnection module 22, further include one or more fourth-level interconnection modules communicatively connected to each third-level interconnection module, ..., and further include one or more nth-level interconnection modules communicatively connected to each (n-1)th-level interconnection module, wherein n is a positive integer greater than or equal to 3. Each nth-level interconnection module is communicatively connected to a neural network processing unit 11 and a high-speed storage unit 12 in a corresponding neural network processing module, respectively.

By using the device described above in the present disclosure, a single-layer neural network operation can be executed, comprising the following steps:
S1, each neural network processing module 10 directly reads data locally according to the address indicated by the opcode in the instruction stored in respective instruction queue 11, and/or reads data from other neural network processing modules 10 through the on-chip interconnection module 20;
S2, each neural network processing module 10 performs partial operation of the single-layer neural network according to the read data to obtain respective operation result data;
S3, each neural network processing module 10 locally stores respective operation result data and/or writes respective operation result data into other neural network processing modules 10 through the on-chip interconnection module 20.

For a multi-layer neural network operation, the implementation process is similar to that of a single-layer neural network operation. After the artificial neural network operation of last layer is completed, each neural network processing module 10 reads new data from the new address according to new operation instructions to perform the calculation and allocates the calculation task among the multicore (i.e., the plurality of neural network processing modules 10) according to the new instructions in the operation of next layer. For the neural network operation of each layer, the above steps S1-S3 are executed, and the operation result data obtained by each neural network processing module 10 of this layer is used for the neural network operation of next layer.

In order to further clarify the objects, technical solutions and advantages of the present disclosure, the present disclosure will be further described in detail below with reference to specific embodiments and the drawings. It should be noted that, although the embodiments described below only discuss the flow chart of the operations of the fully-connected layer, the present disclosure is not limited to the operation of the fully-connected layer, but may also be for the flow chart of the operations of all artificial neural network algorithms.

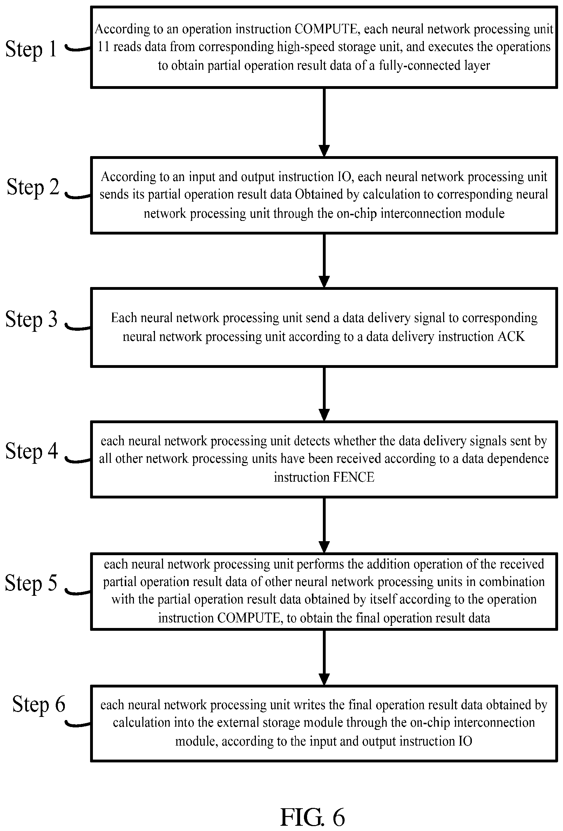

Fig. 6 is a flow chart of an embodiment of the present disclosure executing the operation of one layer of fully-connected layer. The execution process of the operation is shown in Fig. 6.

Step 1: According to the operation instruction COMPUTE, each neural network processing unit 11 reads data from corresponding high-speed storage unit 12, and performs respective calculation to obtain partial operation result data of the fully-connected layer.

In each neural network processing unit 11, the instruction queue 111 sends the operation instruction COMPUTE to the neural network operation unit 112 and the IO reading unit 113. The neural network operation unit 112 determines that an operation of one layer of fully-connected layer is to be executed according to the instruction name in the operation instruction COMPUTE. Specifically, the IO reading unit 113 reads the data required for the operation from its corresponding high-speed storage unit 12 according to the address in the operation instruction COMPUTE and stores the read data in the high-speed buffer unit 114. The neural network operation unit 112 reads corresponding data from the high-speed buffer unit 114, and then executes the operation instruction COMPUTE according to the read data to perform partial operation of the fully-connected layer, the obtained partial operation result data of the fully-connected layer being the output data.

Step 2: According to the input and output instruction IO, each neural network processing unit 11 sends its partial operation result data obtained by calculation to the corresponding neural network processing unit 11 through the on-chip interconnection module 20. Since each neural network processing unit 11 only calculates the partial operation result data, it needs to send the partial output data to corresponding neural network processing unit 11 for addition operation.

Specifically, in Step 1, the neural network operation unit 112 stores the partial operation result data obtained by calculation in the high-speed buffer unit 114. After the instruction queue 111 sends the input and output instruction IO to the IO reading unit 113, the IO reading unit 113 executes the input and output instruction IO to read the partial operation result data stored in the high-speed buffer unit 114 and send it to the corresponding external neural network processing unit 11. Here, it should be noted that, each neural network processing unit 11 may send the partial operation result data to a corresponding neural network processing unit 11 or to a plurality of corresponding neural network processing units 11; that is, each neural network processing unit 11 may receive the partial operation result data sent by one neural network processing unit 11 or the partial operation result data sent by a plurality of neural network processing units 11.

Step 3: After each neural network processing unit 11 sends its partial operation result data obtained by calculation to corresponding neural network processing unit 11, the neural network processing unit 11 needs to execute a data delivery instruction ACK to send a data delivery signal to corresponding neural network processing unit 11. Each neural network processing unit 11 needs to send a data delivery signal to neural network processing units 11 that receive the data that it sends to indicate the data dependency.

Step 4: According to the data dependence instruction FENCE, each neural network processing unit 11 detects whether the sent data delivery signal reaches the corresponding neural network processing unit 11, and if not, it waits for the corresponding data delivery signal to reach corresponding neural network processing unit 11. For each neural network processing unit 11 that will perform the addition operation, only when it receives the data delivery signals sent by all other neural network processing units 11, it indicates that all the required input data has arrived, thus performing the addition operation.

Step 5: According to the operation instruction COMPUTE, each neural network processing unit 11 collects the partial operation result data of other neural network processing units 11, and then performs the addition operation in combination with the partial operation result data obtained by itself to obtain the final operation result data.

Step 6: According to the input and output instruction IO, each neural network processing unit 11 writes the final operation result data obtained by calculation into the external storage module 30 as output data. In each neural network processing unit 11, the execution process of writing the final operation result data into the external storage module 30 is similar to that of Step 2, and will not be repeated here.

To sum up, the device and instruction set provided by the present disclosure solve the problems of insufficient CPU and GPU operation performance and high front-end decoding overheads, and can effectively support multi-layer artificial neural network operations. Meanwhile, dedicated on-chip storage is adopted for the multicore and multi-layer artificial neural network operation, fully mining the reusability of neurons and weight value data, avoiding repeated reading/writing of these data from/to memory, reducing memory access bandwidth, and avoiding the problem that memory bandwidth becomes a bottleneck of multi-layer artificial neural network operation performance.

The process or method depicted above with reference to the drawings may be implemented by processing logic including hardware (e.g., circuit, special-purpose logic, etc.), firmware, software (e.g., software embodied on a non-transitory computer readable medium), or a combination of the two. Although the process or method has been described above according to some sequential operations, it should be understood that some of the described operations can be performed in different sequences. In addition, some operations may be performed in parallel instead of sequentially.

The specific embodiments described above further explain the objects, technical solutions and beneficial effects of the present disclosure. It should be understood that the foregoing are only specific embodiments of the present disclosure and are not intended to limit the present disclosure.

## Claims

1. A device for executing neural network operation, comprising:
an on-chip interconnection module (20); and
a plurality of neural network processing modules (10) communicatively connected to the on-chip interconnection unit (20),
wherein each of the plurality of neural network processing modules (10) is capable of reading data from and writing data to other neural network processing modules of the plurality of neural network processing modules through the on-chip interconnection module (20);
wherein each of the plurality of neural network processing modules (10) comprises a neural network processing unit (11) configured to read and write data,
**characterized in that**
each neural network processing unit (11) further comprises a synchronization relation unit (115),
wherein the synchronization relation unit (115) is configured to execute a data synchronization instruction;
the data synchronization instruction comprises a plurality of opcodes, and each of the opcodes indicates whether a respective neural network processing unit (11) is to participate in a synchronization operation, so as to indicate that multiple neural network processing units (11) are to participate in the synchronization operation;
by executing the data synchronization instruction, the synchronization relation unit (115) is configured to send a synchronization signal to the synchronization relation units of the other neural network processing units participating in the synchronization operation, so as to force the multiple neural network processing units (11) to perform the synchronization operation, wherein the multiple neural network processing units (11) performing the synchronization operation is that the multiple neural network processing units (11) start to execute subsequent instructions only after all of the multiple neural network processing units have executed the data synchronization instruction.

2. The device for executing neural network operation according to claim 1, wherein each of the plurality of neural network processing modules (10) is multicore and multi-layer, and is also capable of reading and writing data locally.

3. The device for executing neural network operation according to claim 2, wherein each of the plurality of neural network processing modules (10) comprises:
a high-speed storage unit (12) configured to store local data.

4. The device for executing neural network operation according to any one of claims 1 to 3, wherein the device further comprises an external storage module (30), and each of the plurality of neural network processing modules (10) is further capable of reading data from and writing data to the external storage module (30) through the on-chip interconnection module (20).

5. The device for executing neural network operation according to claim 3, wherein the neural network processing unit (11) comprises an instruction queue (111), a high-speed buffer unit (114), an input/output, IO, reading unit (113), and a neural network operation unit (112),
wherein the instruction queue (111) configured to store operation instructions,
the IO reading unit (113) configured to read data from outside of the neural network processing unit according to the operation instructions and to buffer the read data into the high-speed buffer unit,
the neural network operation unit (112) configured to read the buffered data from the high-speed buffer unit according to the operation instructions, and to performs the neural network operation to obtain operation result data, and to write the operation result data into the high-speed buffer unit, and
the IO reading unit (113) configured to read the operation result data from the high-speed buffer unit and to write the operation result data to the outside of the neural network processing unit.

6. The device for executing neural network operation according to claim 3, wherein the on-chip interconnection module (20) comprises a first-level interconnection module (21) and a plurality of second-level interconnection modules (22) communicatively connected to the first-level interconnection module (21),
the first-level interconnection module (21) is further communicatively connected to an external storage module, and the plurality of second-level interconnection modules (22) are in one-to-one correspondence with the plurality of neural network processing modules, and
each second-level interconnection module (22) is communicatively connected to a neural network processing unit and a high-speed storage unit of a corresponding neural network processing module, respectively.

7. A method for executing neural network operation, comprising:
providing an on-chip interconnection module (20); and
providing a plurality of neural network processing modules (10) communicatively connected to the on-chip interconnection unit (20),
each of the plurality of neural network processing modules (10) reading data from and writing data to other neural network processing modules of the plurality of neural network processing modules through the on-chip interconnection module (20);
wherein each of the plurality of neural network processing modules (10) comprises a neural network processing unit (11) for reading and writing data;
**characterized in that**
each neural network processing unit (11) further comprises a synchronization relation unit (115), and the method further comprises:
the synchronization relation unit (115) executing a data synchronization instruction;
wherein the data synchronization instruction comprises a plurality of opcodes, and each of the opcodes indicates whether a respective neural network processing unit (11) is to participate in a synchronization operation, so as to indicate that multiple neural network processing units (11) are to participate in the synchronization operation;
by executing the data synchronization instruction, the synchronization relation unit (115) sends a synchronization signal to the synchronization relation units of the other neural network processing units participating in the synchronization operation, so as to force the multiple neural network processing units (11) to perform the synchronization operation, wherein the multiple neural network processing units (11) performing the synchronization operation is that the multiple neural network processing units (11) start to execute subsequent instructions only after all of the multiple neural network processing units have executed the data synchronization instruction.

8. The method according to claim 7, wherein each of the plurality of neural network processing modules (10) is multicore and multi-layer, and the method further comprises
each of the plurality of neural network processing modules (10) reading and writing data locally.

9. The method according to claim 7, wherein each of the plurality of neural network processing modules (10) comprises:
a high-speed storage unit configured to store local data.

10. A method for executing a single-layer neural network operation according to any of the method of claims 7-9, wherein the method comprises the following steps:
each of the plurality of neural network processing modules directly reading data locally and/or reading data from the other neural network processing modules through the on-chip interconnection module (S1);
each of the plurality of neural network processing modules performing a partial operation of the single-layer neural network according to the read data to obtain respective operation result data (S2); and
each of the plurality of neural network processing modules locally storing the respective operation result data and/or writing the respective operation result data into the other neural network processing modules through the on-chip interconnection module (S3).

11. The method for executing single-layer neural network operation according to claim 10, wherein in step S3, after each neural network processing module writing the respective operation result into the other neural network processing modules, the neural network processing module sending a data delivery signal to other specific neural network processing modules.

12. A method for executing multi-layer neural network operation, comprising executing the method of claim 10 for each layer of the multi-layer neural network operation, and applying the operation result data obtained by each neural network processing module of the layer to the neural network operation of a next layer.

## Patentansprüche

1. Vorrichtung zum Ausführen einer Operation eines neuronalen Netzwerks, umfassend:
ein On-Chip-Verbindungsmodul (20); und
eine Vielzahl von Verarbeitungsmodulen (10) für neuronales Netzwerk, die kommunikativ mit der On-Chip-Verbindungseinheit (20) verbunden sind,
wobei jedes aus der Vielzahl von Verarbeitungsmodulen (10) für neuronales Netzwerk in der Lage ist, durch das On-Chip-Verbindungsmodul (20) Daten von anderen Verarbeitungsmodulen für neuronales Netzwerk aus der Vielzahl von Verarbeitungsmodulen für neuronales Netzwerk zu lesen und Daten in diese zu schreiben;
wobei jedes aus der Vielzahl von Verarbeitungsmodulen (10) für neuronales Netzwerk eine Verarbeitungseinheit (11) für neuronales Netzwerk umfasst, die konfiguriert ist, um Daten zu lesen und zu schreiben,
**dadurch gekennzeichnet, dass**
jede Verarbeitungseinheit (11) für neuronales Netzwerk ferner eine Synchronisationsbeziehungseinheit (115) umfasst,
wobei die Synchronisationsbeziehungseinheit (115) konfiguriert ist, um eine Datensynchronisationsanweisung auszuführen;
die Datensynchronisationsanweisung eine Vielzahl von Opcodes umfasst und jeder der Opcodes angibt, ob eine jeweilige Verarbeitungseinheit (11) für neuronales Netzwerk an einer Synchronisationsoperation teilnehmen soll, um anzugeben, dass mehrere Verarbeitungseinheiten (11) für neuronales Netzwerk an der Synchronisationsoperation teilnehmen sollen;
durch Ausführen der Datensynchronisationsanweisung die Synchronisationsbeziehungseinheit (115) konfiguriert ist, um ein Synchronisationssignal an die Synchronisationsbeziehungseinheiten der anderen Verarbeitungseinheiten für neuronales Netzwerk zu senden, die an der Synchronisationsoperation teilnehmen, um die mehreren Verarbeitungseinheiten (11) für neuronales Netzwerk zu zwingen, die Synchronisationsoperation durchzuführen, wobei die mehreren Verarbeitungseinheiten (11) für neuronales Netzwerk die Synchronisationsoperation so durchführen, dass die mehreren Verarbeitungseinheiten (11) für neuronales Netzwerk erst dann anfangen, nachfolgende Anweisungen auszuführen, nachdem alle der mehreren Verarbeitungseinheiten für neuronales Netzwerk die Datensynchronisationsanweisung ausgeführt haben.

2. Vorrichtung zum Ausführen von Operation des neuronalen Netzwerks nach Anspruch 1, wobei jedes aus der Vielzahl von Verarbeitungsmodulen (10) für neuronales Netzwerk mehrkernig und mehrschichtig ist und auch in der Lage ist, Daten lokal zu lesen und zu schreiben.

3. Vorrichtung zum Ausführen von Operation des neuronalen Netzwerks nach Anspruch 2, wobei jedes aus der Vielzahl von Verarbeitungsmodulen (10) für neuronales Netzwerk Folgendes umfasst:
eine Hochgeschwindigkeitsspeichereinheit (12), die konfiguriert ist, um lokale Daten zu speichern.

4. Vorrichtung zum Ausführen von Operation des neuronalen Netzwerks nach einem der Ansprüche 1 bis 3, wobei die Vorrichtung ferner ein externes Speichermodul (30) umfasst und jedes aus der Vielzahl von Verarbeitungsmodulen (10) für neuronales Netzwerk ferner in der Lage ist, durch das On-Chip-Verbindungsmodul (20) Daten aus dem externen Speichermodul (30) zu lesen und Daten in dieses zu schreiben.

5. Vorrichtung zum Ausführen von Operation des neuronalen Netzwerks nach Anspruch 3, wobei die Verarbeitungseinheit (11) für neuronales Netzwerk eine Anweisungswarteschlange (111), eine Hochgeschwindigkeitspuffereinheit (114), eine Eingabe-/Ausgabe-, IO-, Leseeinheit (113) und eine Operationseinheit (112) für neuronales Netzwerk umfasst,
wobei die Anweisungswarteschlange (111) konfiguriert ist, um Operationsanweisungen zu speichern,
die IO-Leseeinheit (113) konfiguriert ist, um Daten von außerhalb der Verarbeitungseinheit für neuronales Netzwerk gemäß den Operationsanweisungen zu lesen und um die gelesenen Daten in die Hochgeschwindigkeitspuffereinheit zu puffern,
die Operationseinheit (112) für neuronales Netzwerk konfiguriert ist, um die gepufferten Daten aus der Hochgeschwindigkeitspuffereinheit gemäß den Operationsanweisungen zu lesen und um die Operation des neuronalen Netzwerks durchzuführen um Operationsergebnisdaten zu erhalten, und um die Operationsergebnisdaten in die Hochgeschwindigkeitspuffereinheit zu schreiben, und
die IO-Leseeinheit (113) konfiguriert ist, um die Operationsergebnisdaten aus der Hochgeschwindigkeitspuffereinheit zu lesen und um die Operationsergebnisdaten außerhalb der Verarbeitungseinheit für neuronales Netzwerk zu schreiben.

6. Vorrichtung zum Ausführen von Operation des neuronalen Netzwerks nach Anspruch 3, wobei das On-Chip-Verbindungsmodul (20) ein Verbindungsmodul der ersten Ebene (21) und eine Vielzahl von Verbindungsmodulen der zweiten Ebene (22) umfasst, die kommunikativ mit dem Verbindungsmodul der ersten Ebene (21) verbunden sind,
das Verbindungsmodul der ersten Ebene (21) ferner kommunikativ mit einem externen Speichermodul verbunden ist und die Vielzahl von Verbindungsmodulen der zweiten Ebene (22) in Eins-zu-Eins-Entsprechung mit der Vielzahl von Verarbeitungsmodulen für neuronales Netzwerk sind, und
jedes Verbindungsmodul der zweiten Ebene (22) jeweils kommunikativ mit einer Verarbeitungseinheit für neuronales Netzwerk und einer Hochgeschwindigkeitsspeichereinheit eines entsprechenden Verarbeitungsmoduls für neuronales Netzwerk verbunden ist.

7. Verfahren zum Ausführen von Operation eines neuronalen Netzwerks, umfassend:
Bereitstellen eines On-Chip-Verbindungsmoduls (20); und
Bereitstellen einer Vielzahl von Verarbeitungsmodulen (10) für neuronales Netzwerk, die kommunikativ mit der On-Chip-Verbindungseinheit (20) verbunden sind,
wobei jedes aus der Vielzahl von Verarbeitungsmodulen (10) für neuronales Netzwerk durch das On-Chip-Verbindungsmodul (20) Daten von anderen Verarbeitungsmodulen für neuronales Netzwerk aus der Vielzahl von Verarbeitungsmodulen für neuronales Netzwerk liest und Daten in diese schreibt;
wobei jedes aus der Vielzahl von Verarbeitungsmodulen (10) für neuronales Netzwerk eine Verarbeitungseinheit (11) für neuronales Netzwerk zum Lesen und Schreiben von Daten umfasst;
**dadurch gekennzeichnet, dass**
jede Verarbeitungseinheit (11) für neuronales Netzwerk ferner eine Synchronisationsbeziehungseinheit (115) umfasst und das Verfahren ferner Folgendes umfasst:
die Synchronisationsbeziehungseinheit (115) führt eine Datensynchronisationsanweisung aus;
wobei die Datensynchronisationsanweisung eine Vielzahl von Opcodes umfasst und jeder der Opcodes angibt, ob eine jeweilige Verarbeitungseinheit (11) für neuronales Netzwerk an einer Synchronisationsoperation teilnehmen soll, um anzugeben, dass mehrere Verarbeitungseinheiten (11) für neuronales Netzwerk an der Synchronisationsoperation teilnehmen sollen;
durch Ausführen der Datensynchronisationsanweisung sendet die Synchronisationsbeziehungseinheit (115) ein Synchronisationssignal an die Synchronisationsbeziehungseinheiten der anderen Verarbeitungseinheiten für neuronales Netzwerk, die an der Synchronisationsoperation teilnehmen, um die mehreren Verarbeitungseinheiten (11) für neuronales Netzwerk zu zwingen, die Synchronisationsoperation durchzuführen, wobei die mehreren Verarbeitungseinheiten (11) für neuronales Netzwerk die Synchronisationsoperation so durchführen, dass die mehreren Verarbeitungseinheiten (11) für neuronales Netzwerk erst dann anfangen, nachfolgende Anweisungen auszuführen, nachdem alle der mehreren Verarbeitungseinheiten für neuronales Netzwerk die Datensynchronisationsanweisung ausgeführt haben.

8. Verfahren nach Anspruch 7, wobei jedes aus der Vielzahl von Verarbeitungsmodulen (10) für neuronales Netzwerk mehrkernig und mehrschichtig ist und das Verfahren ferner Folgendes umfasst
jedes aus der Vielzahl von Verarbeitungsmodulen (10) für neuronales Netzwerk liest und schreibt Daten lokal.

9. Verfahren nach Anspruch 7, wobei jedes aus der Vielzahl von Verarbeitungsmodulen (10) für neuronales Netzwerk Folgendes umfasst:
eine Hochgeschwindigkeitsspeichereinheit, die konfiguriert ist, um lokale Daten zu speichern.

10. Verfahren zum Ausführen einer Operation eines einschichtigen neuronalen Netzwerks nach einem Verfahren der Ansprüche 7-9, wobei das Verfahren die folgenden Schritte umfasst:
jedes aus der Vielzahl von Verarbeitungsmodulen für neuronales Netzwerk liest Daten direkt lokal und/oder liest Daten aus den anderen Verarbeitungsmodulen für neuronales Netzwerk durch das On-Chip-Verbindungsmodul (S1);
jedes aus der Vielzahl von Verarbeitungsmodulen für neuronales Netzwerk führt eine Teiloperation des einschichtigen neuronalen Netzwerks gemäß den gelesenen Daten durch, um jeweilige Operationsergebnisdaten zu erhalten (S2); und
jedes aus der Vielzahl von Verarbeitungsmodulen für neuronales Netzwerk speichert die jeweiligen Operationsergebnisdaten lokal und/oder schreibt die jeweiligen Operationsergebnisdaten in die anderen Verarbeitungsmodule für neuronales Netzwerk durch das On-Chip-Verbindungsmodul (S3).

11. Verfahren zum Ausführen von Operation eines einschichtigen neuronalen Netzwerks nach Anspruch 10, wobei in Schritt S3, nachdem jedes Verarbeitungsmodul für neuronales Netzwerk das jeweilige Operationsergebnis in die anderen Verarbeitungsmodule für neuronales Netzwerk geschrieben hat, das Verarbeitungsmodul für neuronales Netzwerk ein Datenliefersignal an andere spezifische Verarbeitungsmodule für neuronales Netzwerk sendet.

12. Verfahren zum Ausführen von Operation eines mehrschichtigen neuronalen Netzwerks, umfassend das Ausführen des Verfahrens nach Anspruch 10 für jede Schicht des mehrschichtigen neuronalen Netzwerks, und das Anwenden der Operationsergebnisdaten, die durch jedes Verarbeitungsmodul für neuronales Netzwerk für eine Schicht erhalten werden, auf die Operation einer nächsten Schicht.

## Revendications

1. Dispositif destiné à exécuter une opération de réseau neuronal, comprenant :
un module d'interconnexion sur puce (20) ; et
une pluralité de modules de traitement de réseau neuronal (10) connectés en communication à l'unité d'interconnexion sur puce (20),
chacun de la pluralité de modules de traitement de réseau neuronal (10) étant capable de lire des données et d'écrire des données, à partir et dans d'autres modules de traitement de réseau neuronal de la pluralité de modules de traitement de réseau neuronal par l'intermédiaire du module d'interconnexion sur puce (20) ;
chacun de la pluralité de modules de traitement de réseau neuronal (10) comprenant une unité de traitement de réseau neuronal (11) configurée pour lire et écrire des données,
**caractérisé en ce que** chaque unité de traitement de réseau neuronal (11) comprend en outre une unité de relation de synchronisation (115),
ladite unité de relation de synchronisation (115) étant configurée pour exécuter une instruction de synchronisation de données ;
l'instruction de synchronisation de données comprend une pluralité de codes d'opération, et chacun des codes d'opération indiquant si une unité de traitement de réseau neuronal respective (11) doit participer à une opération de synchronisation, de façon à indiquer que de multiples unités de traitement de réseau neuronal (11) doivent participer à l'opération de synchronisation ;
en exécutant l'instruction de synchronisation de données, l'unité de relation de synchronisation (115) est configurée pour envoyer un signal de synchronisation aux unités de relation de synchronisation des autres unités de traitement de réseau neuronal participant à l'opération de synchronisation, de façon à forcer les multiples unités de traitement de réseau neuronal (11) à réaliser l'opération de synchronisation, lesdites multiples unités de traitement de réseau neuronal (11) réalisant l'opération de synchronisation de sorte que les multiples unités de traitement de réseau neuronal (11) commencent à exécuter les instructions suivantes uniquement après que toutes les multiples unités de traitement de réseau neuronal ont exécuté l'instruction de synchronisation de données.

2. Dispositif destiné à exécuter une opération de réseau neuronal selon la revendication 1, chacun de la pluralité de modules de traitement de réseau neuronal (10) étant à cœurs multiples et à couches multiples, et étant également capable de lire et d'écrire des données localement.

3. Dispositif destiné à exécuter une opération de réseau neuronal selon la revendication 2, chacun de la pluralité de modules de traitement de réseau neuronal (10) comprenant :
une unité de stockage à grande vitesse (12) configurée pour stocker des données locales.

4. Dispositif destiné à exécuter une opération de réseau neuronal selon l'une quelconque des revendications 1 à 3, ledit dispositif comprenant en outre un module de stockage externe (30), et chacun de la pluralité de modules de traitement de réseau neuronal (10) étant en outre capable de lire des données et d'écrire des données à partir du et dans le module de stockage externe (30) par l'intermédiaire du module d'interconnexion sur puce (20).

5. Dispositif destiné à exécuter une opération de réseau neuronal selon la revendication 3, ladite unité de traitement de réseau neuronal (11) comprenant une file d'attente d'instructions (111), une unité de mémoire tampon à grande vitesse (114), une unité de lecture d'entrée/sortie, IO, (113), et une unité d'opération de réseau neuronal (112),
ladite file d'attente d'instructions (111) étant configurée pour stocker des instructions d'opération,
l'unité de lecture IO (113) étant configurée pour lire des données à partir de l'extérieur de l'unité de traitement de réseau neuronal selon les instructions d'opérations et pour mettre en mémoire tampon les données lues dans l'unité de mémoire tampon à grande vitesse,
l'unité d'opération de réseau neuronal (112) étant configurée pour lire les données mises en mémoire tampon à partir de l'unité de mémoire tampon à grande vitesse selon les instructions d'opération, et pour réaliser l'opération de réseau neuronal pour obtenir des données de résultat d'opération, et pour écrire les données de résultat d'opération dans l'unité de mémoire tampon à grande vitesse, et
l'unité de lecture IO (113) étant configurée pour lire les données de résultat d'opération à partir de l'unité de mémoire tampon à grande vitesse et pour écrire les données de résultat d'opération à l'extérieur de l'unité de traitement de réseau neuronal.

6. Dispositif destiné à exécuter une opération de réseau neuronal selon la revendication 3, ledit module d'interconnexion sur puce (20) comprenant un module d'interconnexion de premier niveau (21) et une pluralité de modules d'interconnexion de second niveau (22) connectés en communication au module d'interconnexion de premier niveau (21),
ledit module d'interconnexion de premier niveau (21) étant en outre connecté en communication à un module de stockage externe, et ladite pluralité de modules d'interconnexion de second niveau (22) étant en correspondance un à un avec la pluralité de modules de traitement de réseau neuronal, et
chaque module d'interconnexion de second niveau (22) étant connecté en communication à une unité de traitement de réseau neuronal et à une unité de stockage à grande vitesse d'un module de traitement de réseau neuronal correspondant, respectivement.

7. Procédé permettant l'exécution d'une opération de réseau neuronal, comprenant :
la fourniture d'un module d'interconnexion sur puce (20) ; et
la fourniture d'une pluralité de modules de traitement de réseau neuronal (10) connectés en communication à l'unité d'interconnexion sur puce (20),
chacun de la pluralité de modules de traitement de réseau neuronal (10) lisant des données et écrivant des données à partir et dans d'autres modules de traitement de réseau neuronal de la pluralité de modules de traitement de réseau neuronal par l'intermédiaire du module d'interconnexion sur puce (20) ;
chacun de la pluralité de modules de traitement de réseau neuronal (10) comprenant une unité de traitement de réseau neuronal (11) pour lire et écrire des données ;
**caractérisé en ce que**
chaque unité de traitement de réseau neuronal (11) comprend en outre une unité de relation de synchronisation (115), et le procédé comprend en outre :
l'unité de relation de synchronisation (115) exécutant une instruction de synchronisation de données ;
ladite instruction de synchronisation de données comprenant une pluralité de codes d'opération, et chacun des codes d'opération indiquant si une unité de traitement de réseau neuronal respective (11) doit participer à une opération de synchronisation, de façon à indiquer que de multiples unités de traitement de réseau neuronal (11) doivent participer à l'opération de synchronisation ;
en exécutant l'instruction de synchronisation de données, l'unité de relation de synchronisation (115) envoie un signal de synchronisation aux unités de relation de synchronisation des autres unités de traitement de réseau neuronal participant à l'opération de synchronisation, de façon à forcer les multiples unités de traitement de réseau neuronal (11) à réaliser l'opération de synchronisation, lesdites multiples unités de traitement de réseau neuronal (11) réalisant l'opération de synchronisation de sorte que les multiples unités de traitement de réseau neuronal (11) commencent à exécuter les instructions suivantes uniquement après que toutes les multiples unités de traitement de réseau neuronal ont exécuté l'instruction de synchronisation de données.

8. Procédé selon la revendication 7, chacun de la pluralité de modules de traitement de réseau neuronal (10) étant à cœurs multiples et à couches multiples, et ledit procédé comprenant en outre
chacun de la pluralité de modules de traitement de réseau neuronal (10) lisant et écrivant des données localement.

9. Procédé selon la revendication 7, chacun de la pluralité de modules de traitement de réseau neuronal (10) comprenant :
une unité de stockage à grande vitesse configurée pour stocker des données locales.

10. Procédé permettant l'exécution d'une opération de réseau neuronal monocouche selon l'un quelconque des procédés des revendications 7 à 9, ledit procédé comprenant les étapes suivantes :
chacun de la pluralité de modules de traitement de réseau neuronal lisant directement des données localement et/ou lisant des données à partir des autres modules de traitement de réseau neuronal par l'intermédiaire du module d'interconnexion sur puce (S1) ;
chacun de la pluralité de modules de traitement de réseau neuronal réalisant une opération partielle du réseau neuronal monocouche selon les données lues pour obtenir des données de résultat d'opération respectives (S2) ; et
chacun de la pluralité de modules de traitement de réseau neuronal stockant localement les données de résultat d'opération respectives et/ou écrivant les données de résultat d'opération respectives dans les autres modules de traitement de réseau neuronal par l'intermédiaire du module d'interconnexion sur puce (S3).

11. Procédé permettant l'exécution d'une opération de réseau neuronal monocouche selon la revendication 10, à l'étape S3, après que chaque module de traitement de réseau neuronal a écrit le résultat d'opération respectif dans les autres modules de traitement de réseau neuronal, ledit module de traitement de réseau neuronal envoyant un signal de distribution de données à d'autres modules de traitement de réseau neuronal spécifiques.

12. Procédé permettant l'exécution d'une opération de réseau neuronal à couches multiples, comprenant l'exécution du procédé de la revendication 10 pour chaque couche de l'opération de réseau neuronal à couches multiples, et l'application des données de résultat d'opération obtenues par chaque module de traitement de réseau neuronal de la couche à l'opération de réseau neuronal d'une couche suivante.
